Europäisches Patentamt

European Patent Office

Office européen des brevets

(19)

(11) EP 0 697 553 A1

(12) **DEMANDE DE BREVET EUROPEEN**

(43) Date de publication:
**21.02.1996 Bulletin 1996/08**

(51) Int. Cl.$^6$: **F16L 11/08**

(21) Numéro de dépôt: **95202006.3**

(22) Date de dépôt: **20.07.1995**

(84) Etats contractants désignés:
**AT BE DE ES FR GB GR IT NL PT SE**

(30) Priorité: **20.07.1994 BE 9400689**
**27.12.1994 BE 9401177**

(71) Demandeur: **POLVA PIPELIFE B.V.**
**NL-1601 MA Enkhuizen (NL)**

(72) Inventeurs:
• **Dupont, Serge**
**B-1800 Villvoorde (BE)**
• **Delimoy, Didier**
**B-1325 Chaumont-Gistoux (BE)**
• **De Bruille, Thierry**
**B-1330 Rixensart (BE)**

(74) Mandataire: **de Bruijn, Leendert C. et al**
**NL-2502 LS Den Haag (NL)**

(54) **Tuyau composite et procédé pour sa fabrication**

(57) Tuyau composite constitué d'un mandrin cylindrique extrudé comprenant au moins une matière plastique A, renforcé par au moins un faisceau de fibres de renforcement continues enroulé hélicoïdalement autour dudit mandrin, ainsi que par des fibres de renforcement dispersées en son sein, sensiblement parallèlement à son axe, et procédé continu pour sa fabrication

**Description**

La présente invention concerne un tuyau composite à base de matière plastique renforcé au moyen de fibres de renforcement.

Les matières plastiques sont actuellement largement utilisées pour la fabrication de tuyaux de tous types, notamment pour la fabrication de tuyaux destinés à véhiculer des gaz ou des liquides sous pression.

Afin de réduire l'épaisseur de la paroi de tels tuyaux, il a déjà été proposé de les renforcer au moyen de fibres de renforcement disposées à leur surface. Une telle solution est notamment présentée dans le document GB-A-2077880, qui décrit un tuyau en matière plastique renforcé à la fois par des faisceaux de fibres continues de renforcement parallèles à son axe disposés à sa surface et par des faisceaux de fibres continues de renforcement enroulés hélicoïdalement (sous un angle pouvant varier de 30 à 90°).

La fabrication de tels tuyaux selon un procédé continu est d'une complexité considérable ; en effet, outre un ou plusieurs dévidoirs rotatifs de faisceaux de fibres continues de renforcement servant à réaliser le renforcement hélicoïdal, il est nécessaire de prévoir un grand nombre de dévidoirs fixes pour réaliser le renforcement axial (un nombre d'autant plus grand que les faisceaux de fibres continues utilisés pour le renforcement axial sont étroits et que le diamètre extérieur du tuyau est élevé).

En outre, le fait que les faisceaux de fibres continues de renforcement axial soient disposés en une mince épaisseur de manière concentrée à la surface extérieure du mandrin peut porter préjudice à la reprise des efforts axiaux par ceux-ci. De plus, cette reprise dépend de l'adhérence des faisceaux au mandrin, qui dépend elle-même fortement de conditions opératoires, par exemple de la température de ces faisceaux et du mandrin, de la précision du "dépôt" des faisceaux ou encore de la pression exercée sur ceux-ci lors de leur application.

De manière originale, la présente invention a dès lors pour objet un type de tuyau présentant une excellente résistance à l'éclatement à long terme, et qui puisse être fabriqué de manière simple.

De manière plus précise, l'invention concerne un tuyau composite constitué d'un mandrin extrudé comprenant au moins une matière plastique A, renforcé par au moins un faisceau de fibres continues de renforcement enroulé hélicoïdalement autour dudit mandrin, qui se caractérise en ce que le mandrin est en outre renforcé par des fibres de renforcement dispersées en son sein, sensiblement parallèlement à son axe.

Par "mandrin", on entend désigner une ébauche cylindrique creuse destinée à constituer la partie extérieure du tuyau. Ce mandrin est fabriqué dans une première étape par extrusion avant d'être renforcé sur sa face externe.

De manière avantageuse, le faisceau de fibres continues de renforcement est imprégné par une matière plastique B. Un tel faisceau, généralement qualifié de COFIT (continuous fiber impregnated by a thermoplastic), peut en particulier être obtenu en imprégnant les fibres continues de renforcement par un polymère à l'état fondu. Il peut également être obtenu en mettant en oeuvre un faisceau co-mêlé de fibres continues de renforcement et de fibres continues de matière plastique. Il peut encore être obtenu en mettant en oeuvre un faisceau de fibres continues de renforcement entre lesquelles a été dispersée une matière plastique en poudre. Dans ces deux derniers modes d'obtention, il est naturellement indispensable de chauffer le faisceau, avant son enroulement autour d'un mandrin, de manière à ce que la matière plastique fonde et imprègne de manière homogène les fibres de renforcement.

Selon une variante préférée, le mandrin est renforcé par deux faisceaux de fibres continues de renforcement enroulés hélicoïdalement dans des sens opposés.

De préférence, le ou les faisceaux de fibres continues de renforcement disposés hélicoïdalement autour du mandrin sont enroulés quasiment perpendiculairement à l'axe de celui-ci. On les enroule plus préférentiellement à plus de 80° par rapport audit axe.

De manière avantageuse, le tuyau est revêtu extérieurement d'une couche de finition comprenant une matière plastique C. Cette couche de finition, qui peut être réalisée par toute technique connue, notamment par surextrusion ou extrusion-couchage, a plusieurs effets avantageux : tout d'abord, elle protège le(s) faisceau(x) de fibres continues de renforcement de toute dégradation mécanique, notamment au cours de la manutention, du transport et de l'installation du tuyau. Elle peut également assurer la protection chimique des faisceaux de fibres de renforcement, du mandrin et du fluide véhiculé. Elle peut notamment empêcher les polluants présents à l'extérieur du tuyau de contaminer le fluide véhiculé. Enfin, l'application de la couche de finition au moyen d'un dispositif de calibrage permet de donner à la surface extérieure du tuyau renforcé une grande précision dimensionnelle, ce qui facilite la connexion sans fuites du tuyau à des éléments de raccordement tels que manchons, etc.

Lé tuyau peut encore comprendre, éventuellement, d'autres couches, par exemple une couche d'imperméabilisation constituée d'une mince feuille métallique enroulée autour du mandrin renforcé par le(s) faisceau(x) de fibres de renforcement. Dans un tel tuyau, la couche de finition, qui est déposée sur ladite feuille métallique, assure également la protection mécanique de celle-ci.

Les matières plastiques A, B ou C mentionnées ci-dessus peuvent être essentiellement constituées d'un ou plusieurs polymères quelconques, thermodurcissables ou thermoplastiques. Souvent, A, B et C sont essentiellement constituées d'un ou plusieurs polymères thermoplastiques. De préférence, les matières plastiques mises en oeuvre sont thermoplastiques, c'est-à-dire que le ou les polymères dont elles sont essentiellement constituées sont des polymères thermoplastiques. Si plusieurs polymères différents sont utilisés en mélange pour le mandrin (matière plastique A), ils doivent être compatibles entre eux, ou rendus compatibles par l'utilisation d'un ou plusieurs agents compatibilisants adéquats, de manière à ce que le mandrin présente des propriétés mécaniques satisfaisantes. Cette remarque s'applique de manière analogue aux matières plastiques B et C. A titre de polymères thermoplastiques, on peut notamment citer les polyoléfines, dont par exemple le polyéthylène (PE) ou le polypropylène (PP), les polymères du chlorure de vinyle, dont par exemple le poly(chlorure de vinyle) (PVC), ainsi que les polymères dérivés du fluorure de vinylidène, dont par exemple le poly(fluorure de vinylidène) (PVDF). De bons résultats ont été obtenus à partir de polyoléfines, en particulier à partir de PE. On préfère tout particulièrement le polyéthylène de haute densité (PEHD).

Afin notamment d'assurer une bonne adhérence entre le mandrin et le COFIT, et donc une bonne reprise des efforts circonférentiels par ce dernier, la matière plastique B est de préférence compatible avec la matière plastique A ou, mieux encore, d'une nature chimique semblable. A titre de paires de matières plastiques de nature chimique semblable, on peut par exemple utiliser deux polymères de l'éthylène, ou deux polymères du chlorure de vinyle. Leur compatibilité est ainsi assurée. Ces deux matières plastiques peuvent encore être rendues compatibles par l'utilisation d'un ou plusieurs agents compatibilisants adéquats mélangés à au moins l'une d'entre elles. On peut également leur interposer une couche d'adhésif.

Lorsqu'une couche de finition est présente, une bonne adhérence est souhaitable entre celle-ci et la "couche" que constitue(nt) le(s) COFIT à la surface du mandrin, afin d'éviter tout risque de délamination de la couche de finition. En outre, la couche de finition peut ainsi participer, même faiblement, à la reprise des efforts. Afin d'améliorer cette adhérence, la matière plastique C est avantageusement compatible avec la matière plastique B ou, mieux, d'une nature chimique semblable. Ces deux matières plastiques peuvent encore être rendues compatibles par l'utilisation d'un ou plusieurs agents compatibilisants mélangés à au moins l'une d'entre elles. On peut également leur interposer une couche d'adhésif.

En vue d'obtenir des propriétés mécaniques élevées et homogènes du tuyau, les matières plastiques mises en oeuvre sont de préférence compatibles ou, mieux encore, d'une nature chimique semblable.

On préfère donc plus particulièrement que les matières plastiques mises en oeuvre soient essentiellement constituées de polyéthylène de haute densité.

On peut ajouter aux matières plastiques mises en oeuvre tout additif classique connu, par exemple un ou plusieurs pigments, adjuvants de mise en oeuvre, antioxydants, anti-UV, stabilisants, charges minérales, etc., pour autant que leur présence n'affecte pas sensiblement leurs propriétés mécaniques.

Le mandrin peut être constitué d'une ou de plusieurs couches. En particulier, on peut réaliser des mandrins constitués de plusieurs couches distinctes de matières plastiques différentes, par exemple par coextrusion. Ainsi, dans le cas d'un tuyau destiné à véhiculer un fluide corrosif, il peut être utile que le mandrin comporte, outre une couche extérieure comprenant une matière plastique A renforcée de fibres majoritairement axiales, une mince couche intérieure constituée d'une matière plastique présentant une bonne résistance chimique au fluide à véhiculer. On peut par exemple utiliser à cette fin un polymère du fluorure de vinylidène. Pour assurer l'adhérence de cette couche intérieure à la couche voisine du mandrin, il peut être utile de leur interposer un adhésif adéquat.

Conformément à l'invention, le mandrin est renforcé par des fibres de renforcement dispersées en son sein, sensiblement parallèlement à son axe. Ces fibres peuvent être de tout type, par exemple des fibres de verte, de carbone ou d'aramide. On préfère utiliser des fibres de verte. Le diamètre des fibres est généralement de l'ordre de 7 à 100 μm. Les fibres de renforcement dispersées au sein du mandrin sont de préférence des fibres de renforcement courtes; en particulier, leur rapport L/D (longueur/diamètre) est de l'ordre de 10 à 10 000. Pour obtenir des fibres de renforcement d'une longueur relativement élevée et constante, il est avantageux de mettre en oeuvre une matière plastique A se présentant sous la forme de granules cylindriques de longueur déterminée, par exemple par une première étape d'extrusion de la matière plastique avec des fibres de renforcement de longueur élevée, suivie d'une seconde étape de découpage régulier des joncs ainsi obtenus. On préfère que la quantité de fibres dispersées au sein de la matière plastique A soit de 2 à 30 % en volume. Il importe que les fibres de renforcement utilisées soient dispersées sensiblement parallèlement à l'axe du mandrin. Pour ce faire, une solution consiste à utiliser pour réaliser le mandrin une filière d'extrusion comportant une section d'écoulement diamétralement convergente.

Il est nécessaire que les fibres choisies soient chimiquement compatibles avec la matière plastique A ; pour accroître cette compatibilité, et donc leur adhérence à leur matrice, elles sont éventuellement revêtues d'un agent de couplage (ou d'ensimage) approprié. Dans le cas de libres de verte, on peut par exemple utiliser à cette fin l'un des composés de la famille des silanes bien connus dans ce contexte.

Comme déjà mentionné, dans le tuyau composite, c'est le mandrin qui contribue essentiellement à la reprise des efforts axiaux. A cet effet, il est avantageux que le matériau constitutif du mandrin, soit la matière plastique A renforcée par les fibres dispersées en son sein, présente un faible allongement à la rupture dans un essai de traction. En particulier, le matériau constitutif du mandrin présente avantageusement un allongement à la rupture dans un essai de traction selon la norme ISO 527, à une vitesse de 10 mm/min et à une température de 23 °C, ne dépassant pas 100 %. De préférence, cet allongement ne dépasse pas 25 %. Plus préférentiellement encore, il ne dépasse pas 15 %.

Les fibres de renforcement utilisées dans le faisceau enroulé autour du mandrin peuvent également être de tout type, par exemple de l'un des types cités ci-dessus. Ici également, on préfère utiliser des fibres de verre. Quelle que soit leur nature, ces fibres sont continues, c'est-à-dire au moins d'une très grande longueur, par exemple de l'ordre de plusieurs centaines de mètres. Lorsque le faisceau de fibres de renforcement est imprégné par une matière plastique B, on utilise de préférence des quantités respectives de matière plastique B et de fibres de renforcement telles que le COFIT ainsi constitué contienne au moins de l'ordre de plusieurs centaines de fibres par mm² de section. La remarque faite ci-dessus s'applique ici également, concernant la compatibilité des fibres de verre et de la matière plastique.

Selon une variante intéressante de l'invention, l'épaisseur pratique (Ep) du mandrin du tuyau composite selon l'invention peut être déterminée en fonction du diamètre extérieur du mandrin (D), de la pression de service du fluide à véhiculer (P), et de la durée de vie approximative (L) souhaitée pour le tuyau, par exemple 50 ans, à cette pression (P) et à la température de service imposée.

Comme déjà mentionné ci-dessus, l'épaisseur d'un tuyau renforcé par au moins un faisceau de fibres continues enroulé hélicoïdalement est imposée par la résistance du tuyau à l'éclatement dans la direction axiale.

Le plus souvent, l'épaisseur d'un tuyau composite selon l'invention est essentiellement constituée de l'épaisseur du mandrin. En effet, l'épaisseur du faisceau de fibres continues enroulé hélicoïdalement et l'épaisseur de l'éventuelle couche de finition extérieure sont proportionnellement d'un ordre de grandeur nettement inférieur.

Dès lors, c'est l'épaisseur du mandrin qui est généralement déterminante pour la résistance à l'éclatement du tuyau composite dans la direction axiale.

Le mandrin d'un tuyau composite selon l'invention étant renforcé par des fibres de renforcement dispersées en son sein sensiblement parallèlement à son axe, c'est donc dans la direction essentielle de ces fibres qu'il convient d'apprécier la résistance à l'éclatement du mandrin.

Cependant, dans un tuyau non renforcé par un enroulement hélicoïdal de fibres continues de renforcement, c'est généralement la résistance circonférentielle qui est déterminante, puisque la contrainte circonférentielle peut souvent être approximativement estimée au double de la contrainte axiale, et c'est donc dans cette direction circonférentielle que sont disposées les fibres de renforcement qui sont éventuellement dispersées dans la matière constitutive du mandrin. Pour un tel tuyau, obtenu en extrudant la matière plastique à travers une filière comportant par exemple une section divergente, c'est donc dans la direction circonférentielle que l'on mesure expérimentalement de manière classique la résistance à l'éclatement dans la direction des fibres de renforcement. On peut ainsi relier la durée de résistance à l'éclatement ($t_e$) de la paroi du mandrin à la contrainte circonférentielle ($\sigma$) (encore appelée tension tangentielle) qui y règne, à la température de service imposée. Lorsqu'on représente cette relation dans un graphique bilogarithmique ($\sigma$ en fonction de $t_e$), appelé "courbe de régression", les points obtenus expérimentalement sont généralement disposés selon une droite ou deux portions de droites, que l'on peut si nécessaire extrapoler jusqu'à la durée de vie souhaitée (L). De plus amples détails concernant la détermination de cette courbe de régression sont donnés dans la norme ISO DIS 12162. On peut donc relever sur un tel graphique classiquement disponible la contrainte ($\sigma_L$) dans la direction essentielle des fibres de renforcement, correspondant à la durée de vie (L) souhaitée.

L'épaisseur théorique ($E_t$) du mandrin répond alors à la relation suivante :

$$E_t = (P.D) / (4.\sigma_L + P)$$

De manière avantageuse, l'épaisseur pratique ($E_p$) du mandrin d'un tuyau composite selon l'invention correspond à la formule :

$$E_p = K.E_t$$

soit

$$E_p = (K.P.D) / (4.\sigma_L + P)$$

dans laquelle (P) représente la pression de service du fluide à véhiculer, (D) le diamètre du mandrin, ($\sigma_L$) la contrainte dans la direction essentielle des fibres de renforcement correspondant à la durée de vie (L) souhaitée et où K est compris entre 0,5 et 1,5. Lorsque l'épaisseur de la couche de finition éventuelle ne permet pas que cette couche intervienne de manière substantielle pour la reprise des contraintes axiales, K vaut au moins 0,9. De préférence, K est au moins égal à 1. Avantageusement, K ne dépasse pas 1,25. Il va de soi que K ainsi défini ne prend pas en compte les coefficients de sécurité que l'homme du métier intègre classiquement en vue d'une production industrielle.

Les caractéristiques du tuyau selon l'invention sont de préférence déterminées de telle sorte que sa limite de résistance par rapport aux contraintes imposées en service soit d'abord atteinte dans la direction axiale.

Les tuyaux selon l'invention se comparent favorablement aux tuyaux en fonte et sont d'un coût inférieur, en particulier pour les grands diamètres ($\geq \approx$ 30 cm) et les pressions élevées ($\geq \approx$ 10 bars).

La présente invention concerne également un procédé continu de fabrication d'un tuyau tel que décrit ci-dessus, dans lequel les opérations d'extrusion du mandrin, d'enroulement du ou des faisceaux de fibres de renforcement, et le cas échéant de réalisation de la couche de finition, se déroulent en ligne.

Comme exposé ci-dessus, l'extrusion du mandrin se fait en utilisant de préférence une filière comportant une section d'écoulement diamétralement convergente, afin d'orienter essentiellement parallèlement à son axe les fibres de renforcement dispersées en son sein.

L'enroulement du ou des faisceaux de fibres continues de renforcement peut se faire en utilisant un dispositif planétaire, c'est-à-dire un plateau annulaire de grande dimension dont l'axe de rotation coïncide avec celui de l'extrudeuse et donc du mandrin, portant un ou plusieurs dévidoirs de faisceaux de fibres de renforcement. La vitesse de rotation de ce plateau annulaire est adaptée, notamment en fonction de la vitesse d'extrusion du mandrin, de la largeur des faisceaux de fibres de renforcement, de leur angle d'enroulement, etc., afin d'obtenir des spires jointives à la surface du mandrin. Si l'on désire enrouler plusieurs faisceaux de fibres de renforcement dans des sens différents, il faut naturellement utiliser deux tels plateaux annulaires, décalés axialement et tournant dans des sens opposés. Il est en outre préférable, juste avant que les faisceaux de fibres de renforcement n'entrent en contact avec le mandrin, de préchauffer au moins la couche superficielle de l'un de ces deux éléments à une température supérieure, de préférence supérieure de 5 à 100 °C, à la température de fusion ou de ramollissement de sa matière plastique constitutive, de manière à améliorer leur adhérence. Il est également recommandé d'enrouler les faisceaux de fibres de renforcement autour du mandrin en leur appliquant une certaine tension.

Dans les cas où on utilise un seul faisceau de fibres de renforcement que l'on enroule quasiment perpendiculairement à l'axe du tuyau, il suffit d'utiliser un seul plateau annulaire portant un seul dévidoir de faisceaux de fibres de renforcement, ce qui permet d'utiliser une installation de fabrication extrêmement simplifiée.

Après l'enroulement du ou des faisceaux de fibres continues de renforcement, on peut procéder à la réalisation de la couche de finition, par exemple en faisant passer le mandrin renforcé dans une tête d'extrusion en équerre que l'on alimente par la matière plastique C fondue.

Ce procédé est d'une grande simplicité, et particulièrement économique à mettre en oeuvre. En particulier, si le "dépôt" de la couche de finition sur le mandrin renforcé se fait immédiatement après que celui-ci ait été renforcé par enroulement de faisceau(x) de fibres continues de renforcement, le réchauffage superficiel du mandrin renforcé ne nécessitera pas une énergie importante, en raison de la température élevée à laquelle sont généralement préchauffés superficiellement le mandrin et/ou les faisceaux de fibres de renforcement avant le renforcement du mandrin par ces derniers.

## Exemples

Les exemples suivants illustrent, de façon non limitative, les avantages du tuyau selon l'invention. L'exemple 1R est donné à titre de comparaison, et l'exemple 2 est conforme à l'invention.

## Exemple 1R (comparatif)

On a fabriqué un tuyau d'un diamètre extérieur de 110,2 mm, en extrudant tout d'abord un mandrin d'une épaisseur de 6,2 mm, à partir d'un polyéthylène de haute densité (PEHD) ne comprenant pas de fibres de renforcement, de type ELTEX® TUB71 de SOLVAY, dont le MRS (Maximal Residual Stress selon les normes ISO/TR9080 et DIS 12162) à 20 °C était de 8 MPa. L'allongement maximum à la rupture de ce polymère était supérieur à 350 %, mesuré à 23 °C et à une vitesse de traction de 10 mm/min, selon la norme ISO 527. On a enroulé autour de ce mandrin deux COFIT, chacun d'une épaisseur de 0,30 mm, d'une largeur avant mise en oeuvre de 10 mm, et comprenant environ 4 000 fibres de verre d'un diamètre d'environ 17 µm. Ces COFIT avaient été imprégnés par un mélange de PEHD ELTEX® A3300 de SOLVAY et de PEHD fonctionnalisé de type POLYBOND® 3009, dans des proportions pondérales 95/5. La résistance en traction longitudinale de ces COFIT a été évaluée à 600 MPa et leur MRS a été estimé par extrapolation à 375 MPa.

L'enroulement des COFIT s'est fait sous traction à 89,5° par rapport à l'axe du mandrin, après les avoir préchauffés à environ 220 °C. Une couche de finition d'une épaisseur moyenne de 1,75 mm, constituée du même PEHD que le mandrin, a finalement été déposée par extrusion-couchage à la surface de ce mandrin renforcé.

On a soumis des tronçons de ce tuyau, d'une longueur de 80 cm, obturés à leurs extrémités au moyen de manchons étanches, à divers tests de résistance instantanée à l'éclatement, conformément à la norme ISO 1167, en les remplissant d'eau sous pression à 20 °C :

- selon a, on a renforcé le tuyau au moyen d'une barre axiale, afin de ne mesurer que sa résistance aux efforts circonférentiels : on a élevé rapidement la pression et on a relevé à quelle pression (P) le tuyau a éclaté ;
- selon b, on n'a pas utilisé de telle barre axiale, afin de tenir compte à la fois des efforts axiaux et circonférentiels ;
- selon c et d, également sans barre axiale, on a mesuré la durée de vie du tuyau (L) jusqu'à éclatement, sous une pression (P) réduite par rapport à sa pression instantanée d'éclatement.

Les résultats de ces essais figurent dans le tableau 1.

Lors de leur mise en pression, ces tronçons de tuyau se déformaient progressivement en torsion et en flexion axiale. En outre, l'importance de ces déformations conduisait à la fissuration de la couche de finition avant même la rupture du tuyau.

**TABLEAU 1**

|  | Essai a | Essai b | Essai c | Essai d |
|---|---|---|---|---|
| P [MPa] | 9,6 | 7,0 | 5,3 | 4,0 |
| L [heures] | - | - | 0,5 | 158 |

<u>Exemple 2 (selon l'invention)</u>

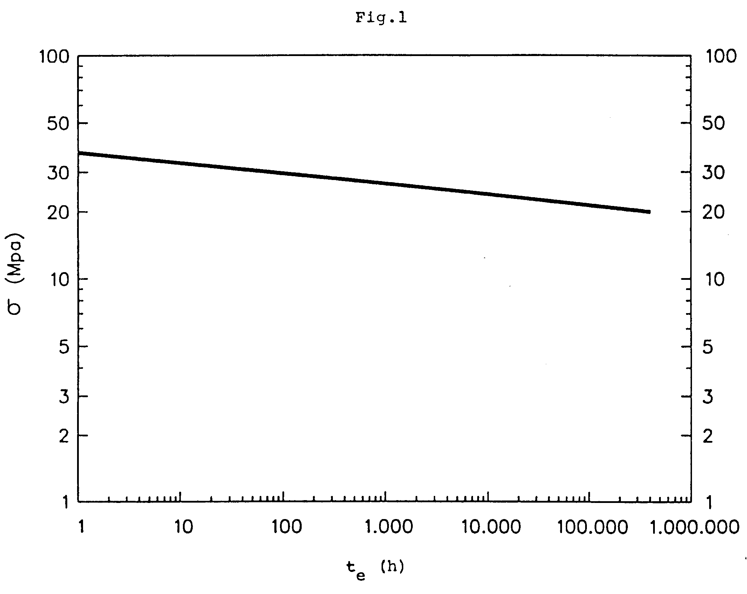

Dans cet exemple, on a réalisé un tuyau de 109,9 mm de diamètre extérieur, en extrudant tout d'abord un mandrin d'une épaisseur de 4,6 mm, à partir de PEHD contenant 20 % en masse de fibres de verre d'une longueur unitaire moyenne avant extrusion de 4,5 mm et d'un diamètre de 13 $\mu$m, dispersées essentiellement axialement au sein du mandrin par extrusion. Cette matière plastique renforcée de fibres de verre présentait un MRS de 20 MPa. L'allongement maximum à la rupture du matériau constitutif du mandrin était compris entre 10 et 15 %, mesuré de la même manière que dans l'exemple 1R. La courbe de régression du matériau constitutif du mandrin, obtenue à partir de la mesure de la résistance circonférentielle d'un tuyau dans lequel les fibres de verre sont disposées essentiellement circonférentiellement, est reproduite à la figure 1. Les abscisses correspondent aux durées de résistance à l'éclatement ($t_e$), exprimées en heures, et les ordonnées aux contraintes circonférentielles ($\sigma$), exprimées en MPa. A l'exception du mandrin, les autres couches du tuyau de l'exemple 2 ont été réalisées de la même manière que dans l'exemple 1R, l'épaisseur de la couche de finition étant toutefois ici de 0,6 mm.

Ce tuyau a été soumis aux mêmes tests que celui de l'exemple 1R, et leurs résultats figurent dans le tableau 2.

A partir des résultats des essais c et d, on a reporté sur la courbe de régression de la figure 1 la durée de vie mesurée expérimentalement et on en a déduit la contrainte $\sigma_L$ correspondante dans la direction essentielle des fibres de renforcement. On a alors calculé l'épaisseur théorique du mandrin selon la formule $E_t = (P. D) / (4.\sigma_L + P)$ puis la valeur de K en rapportant l'épaisseur réelle du mandrin ($E_p$) à l'épaisseur théorique ($E_t$). Ces résultats figurent également dans le tableau 2.

Après éclatement, le tuyau ne présentait aucune déformation rémanente et aucune rupture de la couche de finition.

**TABLEAU 2**

|  | Essai a | Essai b | Essai c | Essai d |
|---|---|---|---|---|
| P [MPa] | 9,6 | 8,1 | 6,0 | 5,0 |
| L [heures] | - | - | 3 | 30 |
| $\sigma_L$ [MPa] | - | - | 35 | 31,6 |
| $E_t$ [mm] | - | - | 4,42 | 4,09 |
| K | - | - | 1,04 | 1,12 |

**Revendications**

1. Tuyau composite constitué d'un mandrin extrudé comprenant au moins une matière plastique A, renforcé par au moins un faisceau de fibres continues de renforcement enroulé hélicoïdalement autour dudit mandrin, caractérisé en ce que le mandrin est en outre renforcé par des fibres de renforcement dispersées en son sein, sensiblement parallèlement à son axe.

2. Tuyau selon la revendication 1, dans lequel le faisceau de fibres continues de renforcement est imprégné par une matière plastique B.

3. Tuyau selon l'une quelconque des revendications précédentes, revêtu extérieurement d'une couche de finition comprenant une matière plastique C.

4. Tuyau selon l'une quelconque des revendications précédentes, dans lequel les matières plastiques mises en oeuvre sont essentiellement constituées de polyéthylène de haute densité.

5. Tuyau selon l'une quelconque des revendications précédentes, dans lequel le mandrin est renforcé par deux faisceaux de fibres continues de renforcement enroulés hélicoïdalement dans des sens opposés.

6. Tuyau selon l'une quelconque des revendications précédentes, dans lequel les fibres de renforcement sont des fibres de verre.

7. Tuyau selon l'une quelconque des revendications précédentes, dans lequel les fibres de renforcement dispersées au sein du mandrin sont des fibres de renforcement courtes.

8. Tuyau selon l'une quelconque des revendications précédentes, dans lequel la matière plastique A renforcée par les fibres dispersées en son sein présente un allongement à la rupture dans un essai de traction selon la norme ISO 527, à une vitesse de 10 mm/min et à une température de 23 °C, ne dépassant pas 100 %.

9. Tuyau selon l'une quelconque des revendications précédentes, dans lequel l'épaisseur pratique ($E_p$) du mandrin correspond à la formule :

$$E_p = (K.P. D) / (4\sigma_L + P)$$

dans laquelle (P) représente la pression de service du fluide à véhiculer, (D) le diamètre du mandrin, ($\sigma_L$) la contrainte dans la direction essentielle des fibres de renforcement correspondant à la durée de vie (L) souhaitée et où K est compris entre 0,5 et 1,5.

10. Tuyau selon l'une quelconque des revendications précédentes, tel que sa limite de résistance par rapport aux contraintes imposées en service soit d'abord atteinte dans la direction axiale.

11. Procédé continu de fabrication d'un tuyau selon l'une quelconque des revendications précédentes, dans lequel les opérations d'extrusion du mandrin, d'enroulement du ou des faisceaux de fibres de renforcement, et le cas échéant de réalisation de la couche de finition, se déroulent en ligne.

Fig.1

EP 0 697 553 A1

**Office européen des brevets**

# RAPPORT DE RECHERCHE EUROPEENNE

Numero de la demande

EP 95 20 2006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | GB-A-2 077 880 (DAINIPPON) <br> * page 1, ligne 1 - ligne 23 * | 1-3,6 | F16L11/08 |
| A | * page 2, ligne 25 - ligne 29 * <br> --- | 4,5,11 | |
| Y | EP-A-0 158 631 (KNOCH) | 1-3,6 | |
| A | * abrégé; revendication 6; figure 2 * <br> --- | 7 | |
| Y | GB-A-2 005 377 (CIBY-GEIGY) <br> * revendications 1-4 * <br> --- | 1,6 | |
| A | EP-A-0 530 074 (CARPENTER) <br> * colonne 2, ligne 41 - ligne 58; figures 1,2 * <br> --- | 1,6,7 | |
| A | US-A-4 705 660 (DEMARLE) <br> ----- | | |

**DOMAINES TECHNIQUES RECHERCHES (Int.Cl.6)**

F16L
B29C
B29D

Le présent rapport a été établi pour toutes les revendications

| Lieu de la recherche | Date d'achèvement de la recherche | Examinateur |
|---|---|---|
| LA HAYE | 27 Septembre 1995 | Boutelegier, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)